# EUROPEAN PATENT APPLICATION

(11) **EP 2 874 063 A2**
(43) Date of publication of application: **20.05.2015**
(21) Application number: 14192848.1
(22) Date of filing: 12.11.2014
(51) Int. Cl.: G06F 9/50

(54) **Method and apparatus for allocating computing resources in touch-based mobile device**

(30) Priority: 12.11.2013 KR 20130136969
(71) Applicant: Samsung Electronics Co., Ltd, Gyeonggi-do 443-742 (KR); Seoul National University R&DB Foundation, Seoul 151-742 (KR)
(72) Inventor: Hong, Seong-Soo, Seoul (KR); Huh, Sung-Ju, Seoul (KR); Kim, Jin-Hyoung, Seoul (KR); Park, Yong-Seok, Seoul (KR); Yoon, Kang-Jin, Seoul (KR)
(74) Representative: Birchenough, Lewis

(57) **Abstract**

A method and apparatus for allocating resources in a touch-based electronic device. The method includes recognizing an interaction pattern of a touch signal if the touch signal of a user interaction for multitasking via a touch screen of the electronic device is received; determining a level of a resource based on the recognized interaction pattern; and allocating at least one resource of the electronic device in accordance with the level. The apparatus includes a pattern recognition unit configured to, if a touch signal corresponding to user interaction for multitasking is sensed via a touch screen, recognize an interaction pattern based on the touch signal; a resource determination unit configured to determine a level of a resource based on the interaction pattern; and a resource allocation unit configured to allocate at least one resource of the electronic device based on the level of the resource determined in the resource determination unit.

## Description

### BACKGROUND

### 1. Field of the Invention

The present invention relates generally to a touch-based multitasking mobile device, and more particularly, to a computing resource allocation technology for providing a more improved user experience through resource allocation which is optimized in accordance with a touch pattern of a user.

### 2. Description of the Related Art

The rapid development of technologies for mobile devices such as smartphones and the like made it possible that common users were provided with various services of more improved qualities using the mobile devices. The biggest factor that made this development possible can be said to be the qualitative improvement of mobile device hardware. Recently launched smartphones are not much different than desktop computer hardware in that the smartphones are equipped with four or more Central Processing Units (CPUs), a memory of 2 Giga Bytes (GB) or more, a storage space of 128 GB or more, and even a Long Term Evolution (LTE) modem. In accordance with this, software (e.g., an operating system, a framework, an application and the like) for using these components is getting more diverse and complex. Application software installed in the latest smartphones are not much different than those of the desktop computers. Innovative technologies such as full 3-Dimensional (3D) technology, a multi-window technology and the like are being continually applied to the smartphones. As the software of the smartphones became complex, users enjoyed the benefits of more services, but it became more difficult to achieve a qualitatively satisfactory user experience.

Generally, a method of improving user reactivity in a touch-based multitasking mobile device is allocating more computing resources to an application occupying a screen of the mobile device. Here, the computing resources include a CPU, a memory bandwidth, a network bandwidth and the like.

Google's Android gives a higher priority order of about nine times to foreground applications occupying a screen as compared to background applications and allocates a CPU resource proportionally to the priority order. This guarantees that foreground applications use a CPU for a longer time, thereby improving user reactivity. In a case of a smartphone Operating System of Apple (iOS), it is known that all processes associated with a user touch can be set in real-time priority order to use a CPU preferentially with regard to other applications of general priority order. In addition, the Blackberry OS of Blackberry Limited (formerly Research in Motion (RIM)) and Symbian of Nokia each provides improved user reactivity as well in a similar method, that is, a method of statically giving a high importance to a process affecting an interaction with a user.

In recent years, with the abundance of resources of mobile devices, multitasking is possible in one screen having a plurality of foreground priority-order applications. As the foreground applications competed against each other for resources, it became more difficult to improve user reactivity. In this environment, an application with which a user interacts changes from hour to hour. Because of this, an existing foreground/background priority-order model of simply determining an importance through screen occupation or non-occupation or a method of statically determining the priority order of processes cannot effectively distinguish an application with which the user currently interacts and an otherwise application.

### SUMMARY

The present invention has been made to solve at least the above-mentioned problems and/or disadvantages, and to provide at least the advantages described below. Accordingly, an aspect of the present invention is to provide a computing resource allocation method and apparatus of a touch-based electronic device for determining the optimum allocation extents of CPU, memory, and network resources and allocating the determined optimum resources to achieve the optimum user reactivity in accordance with a user interaction pattern in a touch-based multitasking mobile device.

In accordance with an aspect of the present invention, a method for allocating resources in a touch-based electronic device is provided. The method includes recognizing an interaction pattern based on a touch signal if the touch signal corresponding to a user interaction for multitasking via a touch screen of the electronic device is received; determining a level of a resource based on the interaction pattern; and allocating at least one resource of the electronic device in accordance with the level.

In accordance with another aspect of the present invention, an apparatus for resource allocation in a touch-based electronic device is provided. The apparatus includes a pattern recognition unit configured to, if a touch signal corresponding to a user interaction for multitasking is sensed via a touch screen, recognize an interaction pattern based on the touch signal, a resource determination unit configured to determine a level of a resource based on the recognized interaction pattern, and a resource allocation unit configured to allocate at least one resource of the electronic device based on the level of the resource determined in the resource determination unit.

### BRIEF DESCRIPTION OF THE DRAWINGS

The above and other aspects, features, and advantages of the present invention will be more apparent from the following detailed description when taken in conjunction with the accompanying drawings, in which:
FIGs. 1A and 1B are diagrams for describing resource requirements varying in accordance with a kind of application in a mobile device that is performing a multi-window function;
FIGs. 2A and 2B are diagrams for describing resource requirements varying in accordance with kinds of various user interactions in a mobile device;
FIG. 3 is a flowchart of a method of allocating computing resources in a touch-based electronic device according to an embodiment of the present invention;
FIG. 4 is a flowchart of a method of describing the step of recognizing an interaction pattern of FIG. 3;
FIG. 5 is a diagram of instant interaction patterns, contiguous interaction patterns, and multi-touch interaction patterns as interaction patterns;
FIG. 6 is a diagram describing the allocation extents of a CPU time, a CPU clock frequency, a memory bandwidth, and a network bandwidth according to an interaction pattern;
FIGs. 7A and 7B are diagrams exemplifying CPU, memory and network resource allocation according to an interaction pattern;
FIG. 8 is a block diagram of one an apparatus for allocating computing resources in a touch-based mobile device according to an embodiment of the present invention; and
FIG. 9 is a block diagram a pattern recognition unit of FIG. 8.

### DETAILED DESCRIPTION OF EMBODIMENTS OF THE PRESENT INVENTION

Embodiments of the present invention are described herein below with reference to the accompanying drawings. In describing the present invention, well-known functions or constructions are not described in detail since they would obscure the invention in unnecessary detail. Further, terms described below, which are defined considering functions in the present invention, can be modified in accordance with user and operator intention or practice. Therefore, the definition should be based of the content throughout the present specification.

A mobile device of the present invention is a terminal in which touch-based multitasking is possible and voice communication and/or data communication is possible. The mobile device can be, for example, one or a combination of more of various devices such as a smartphone, a tablet Personal Computer (PC), a mobile phone, an e-book reader, a laptop PC, a netbook computer, a Personal Digital Assistant (PDA), a Portable Multimedia Player (PMP), a wearable device, an electronic clock, a navigation device, an electronic dictionary and the like. The mobile device according to an embodiment of the present invention is not limited to the aforementioned devices. The mobile device may be referred to as "an electronic device".

A computing resource allocation method for improved user reactivity in a touch-based mobile device according to the present invention can include the following three processes. That is, a first process is a process of recognizing a user interaction pattern, a second process is a process of determining the allocation extent of computing resources in accordance with the recognized user interaction pattern, and a third process includes a process of actually managing the computing resources on the basis of the determined allocation extent.

In the first process, if an electrical signal is generated in an event of touching a touch screen of the mobile device and is delivered to a touch pattern recognition means (i.e., a pattern recognition unit described below), the touch pattern recognition means recognizes a kind of a pattern corresponding to the received electrical signal. The touch pattern recognition means recognizes the electrical signal as any one of an instant interaction pattern, a contiguous interaction pattern, and a multi-touch interaction pattern.

In the second process, a resource allocation determination means (i.e., a resource determination unit described below) determines a CPU time, a CPU frequency, a memory bandwidth, and a network bandwidth, which were required according to the recognized touch pattern, based on learning in accordance with a current hardware characteristic of the mobile device. The resource allocation determination means gradually and additionally allocates the CPU time, the CPU frequency, the memory bandwidth, and the network bandwidth as a time maintaining the recognized touch pattern increases.

In the third process, the determined CPU time, CPU frequency, memory bandwidth, and network bandwidth are delivered to a CPU scheduler (i.e., a scheduler described below), a CPU frequency controller (i.e., a CPU frequency control module described below), a memory allocator (i.e., a memory allocation module described below), and a network bandwidth controller (i.e., a bandwidth control module described below), respectively, to allocate each computing resource.

A detailed description of operations of the present invention are as follows. If a user interacts with a touch-based mobile device, a touch screen of the mobile device delivers an electrical signal about the interaction to a touch pattern recognition means. The electrical signal is composed of a sequence of coordinates at which touches occur. The touch pattern recognition means analyzes the electrical signal and determines if the electrical signal belongs to one of three predefined interactions. If the electrical signal belongs to none of the three predefined interactions, the touch pattern recognition means allocates a computing resource statically determined by an existing operating system. On the other hand, if the electrical signal belongs to one of the three predefined interactions, the touch pattern recognition means delivers the recognition result to a resource allocation determination means. The resource allocation determination means has stored a resource allocation model by interaction pattern which is determined by learning. This model is a function of time. If user interaction is held for a long time, the resource allocation determination means can gradually allocate resources by multiplying time by a linear gain value of each allocation resource in accordance with the model. If a resource to be allocated is determined in the resource allocation determination means, this information is delivered to a constituent element taking charge of each resource. In a case of a CPU resource, a CPU time and a CPU frequency are delivered to the CPU scheduler and the CPU frequency controller, respectively, such that the CPU time and the CPU frequency can be allocated to an application with which a user is interacting. In a case of a memory resource, the memory allocator allocates a storage area of a memory such that the application with which the user is interacting can be guaranteed to use a storage area of the memory or more. In a case of a modem being a network resource, the network bandwidth controller allocates a network bandwidth of the modem such that the application with which the user is interacting can be guaranteed to use a network bandwidth or more.

As described above, three user interaction patterns recognized in the present invention include an instant interaction pattern, a contiguous interaction pattern, and a multi-touch interaction pattern.

The instant interaction pattern is a pattern in which a user wants an instant response within a very short time. For example, tap, double tap, and tap & hold belong to the instant interaction pattern. This instant interaction pattern mainly accompanies CPU convergent, memory convergent, and network convergent workloads. For example, the instant interaction pattern is used for entering a new Uniform Resource Locator (URL) in a web browser, performing a search, executing application software, selecting a button or icon within an application, and typewriting within the application.

The contiguous interaction pattern is a pattern in which a user interacts continually for a relatively long time. For example, drag and flick belong to the contiguous interaction pattern. The contiguous interaction pattern mainly accompanies CPU convergent, memory convergent, network convergent workloads. Particularly, as an interaction duration time increases, a CPU resource is much required and a network resource is little required. For example, the contiguous interaction pattern is used for searching up/down a screen already loaded in a web browser, moving to other pages in the web browser, searching an image in a gallery application, moving a character in a game application, and drawing a line in a picture drawing application.

The multi-touch interaction pattern is a pattern in which a user interacts for a relatively long time using two or more fingers. For example, pinch & spread and rotate belong to the multi-touch interaction pattern. The multi-touch interaction pattern mainly accompanies CPU convergent and memory convergent workloads. Particularly, as a user interaction duration time increases, a memory resource is much required. For example, the multi-touch interaction pattern is used for zooming out, zooming in, and rotating in various applications. Particularly, the multi-touch interaction pattern is an interaction pattern that is useful for a picture drawing application and a gallery application.

The following description is made for resource allocation policies according to the three user interaction patterns. The resource allocation policy for each of the classified three interaction patterns can be determined through learning when a touch-based multitasking mobile device is designed. Embodiments of the present invention are described as follows.

First, in a case of the instant interaction pattern, when a user instantly interacts with an application, the CPU, memory, and network resource allocation extents of the application are increased as follows.

The CPU scheduler instantly increases to a maximal value the priority order of an application such that the corresponding application can be allocated a longer CPU time regarding a CPU. Also, the CPU frequency controller instantly increases to a maximal value a CPU clock frequency at which an application is being executed from an instant interaction occurrence time point such that the corresponding application can be executed more quickly. Also, the memory allocator instantly increases to a maximum value a usable memory usage area of an application such that the corresponding application can be guaranteed sufficient memory usage. Also, the network bandwidth controller instantly increases to a maximum value a usable network bandwidth of an application such that the corresponding application can respond quickly.

Second, in a case of the contiguous interaction pattern, when the user contiguously interacts with an application, the CPU, memory, and network resource allocation extents of the application are increased as follows.

The CPU scheduler gradually compensates the priority order of an application with a value multiplying time by a positive gain value such that the corresponding application can be allocated a longer CPU time. That is, as a user interaction duration time increases, the application is allocated higher priority order to guarantee the longer CPU time. However, the compensated priority order cannot exceed the maximum value defined by a system manager. Also, the CPU frequency controller instantly increases to the maximal value a CPU clock frequency at which an application is being executed from a contiguous interaction occurrence time point such that the corresponding application can be executed more quickly. Also, the memory allocator instantly increases to the maximum value a usable memory usage area of an application such that the corresponding application can be guaranteed sufficient memory usage. The network bandwidth controller gradually compensates the priority order of an application with a value multiplying time by a negative gain value such that the corresponding application can be allocated a longer network time. That is, as the user interaction duration time increases, the application is allocated a smaller network bandwidth. However, the compensated network bandwidth cannot get smaller than the originally allocated network bandwidth of the application. Also, if the contiguous interaction duration time gets longer than a threshold value, the network bandwidth controller minimizes the network bandwidth, thereby converting a Communication Processor (CP) into a low power mode, improving the power efficiency of the mobile device.

Third, in a case of the multi-touch interaction pattern, when the user multi-touch interacts with an application, the CPU, memory, and network resource allocation extents of the application are increased as follows.

The CPU scheduler instantly increases to the maximal value the priority order of an application such that the corresponding application can be allocated a longer CPU time. Also, the CPU frequency controller instantly increases to the maximal value a CPU clock frequency at which an application is being executed from a multi-touch interaction occurrence time point such that the corresponding application can be executed more quickly. Also, the memory allocator gradually compensates a usable memory usage area of an application with a value multiplying time by a positive gain value such that the corresponding application can be guaranteed sufficient memory usage. That is, as a user interaction duration time increases, the application is allocated a larger memory area. However, the compensated memory area can exceed the maximum value defined by a system manager. On the other hand, in a case of the multi-touch interaction pattern, there is no need to additionally adjust a network resource, so the network bandwidth controller allocates no separate network resource in such an extent that it maintains an existing set network bandwidth.

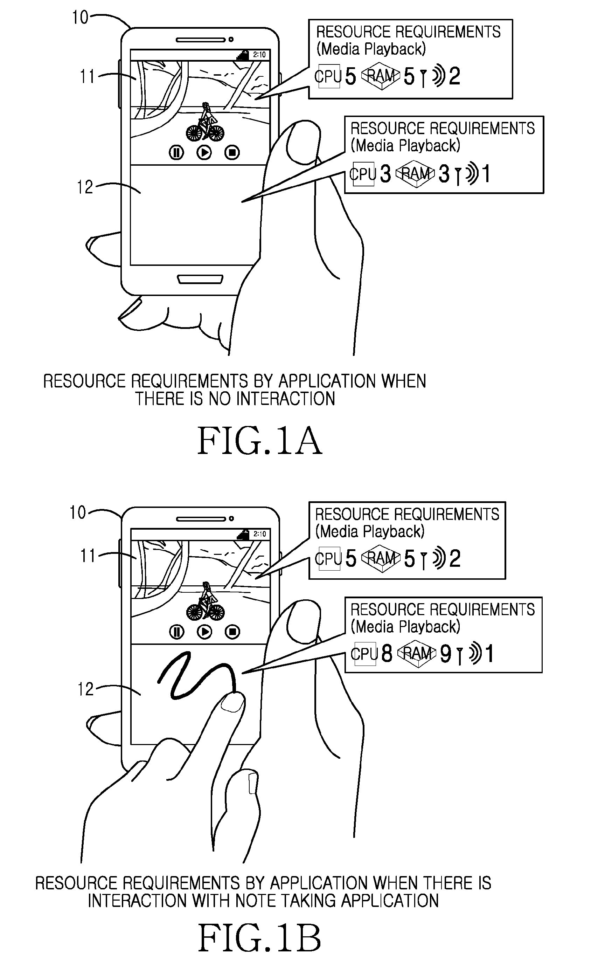

FIGS. 1A and 1B are diagrams for describing resource requirements varying in accordance with a kind of application in a mobile device that is performing a multi-window function. For example, as in FIG. 1A, in a newest smartphone 10 equipped with a multi-window function, a user can execute a video playback application 11 at one side of a screen and concurrently, can execute a note taking application 12 at the other side of the screen. In this case, FIG. 1A illustrates resource allocation requirements per application when there is no user interaction, and FIG. 1B illustrates resource allocation requirements per application when user interaction occurs in a note taking application. As illustrated in FIGS. 1A and 1B, even when the resource requirements of two applications are distinctly different from each other, the conventional foreground/background priority-order models all allocate the same resource to the two applications. Accordingly, the conventional technology cannot allocate a sufficient resource to an application with which a user interacts, because it allocates the same resource to all applications that are occupying a screen.

Also, because the extent of required reactivity and the kind of necessary computing resource become different depending on whether a user interacts with an application though it is the same application, the conventional static method fails to guarantee the extent of required user reactivity.

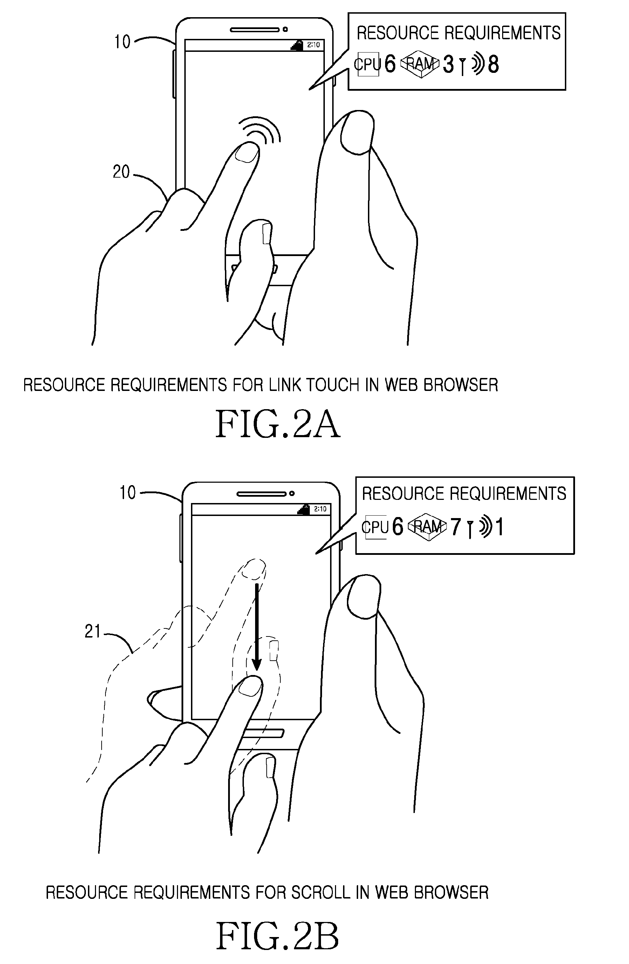

FIGS. 2A and 2B are diagrams for describing resource requirements varying in accordance with kinds of various user interactions in a mobile device. FIG. 2A illustrates resource allocation requirements for link touch in a web browser, and FIG. 2B illustrates resource allocation requirements for drag (e.g. scroll) in the web browser. As shown in FIGS. 2A and 2B, when a user touches a link to enter a new Uniform Resource Locator (URL) 20 and when the user scrolls up/down to read the content of a web page 21 already loaded, their resource usage patterns are different from each other. At link touch, many CPU and network resources are required for constructing a Document Object Model (DOM) tree of a corresponding page and reading contents from a server. In contrast, for a drag, many CPU and memory resources are required for storing new content in a frame buffer and updating the new content to a screen. However, an existing static resource allocation technique cannot satisfy the dynamically varying resource usage requirements. This becomes the main cause of an inferior user experience.

Also, conventional resource allocation mainly aims at only the allocation of a CPU resource. Commonly, the mobile device has to efficiently allocate an application various resources such as a memory, a network, and the like as well as a CPU such that the application can respond more quickly.

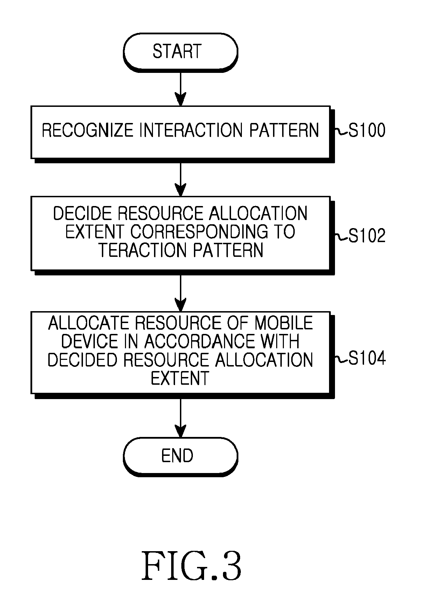

FIG. 3 is a flowchart of a method of allocating computing resources in a touch-based electronic device according to an embodiment of the present invention.

A touch pattern recognition means receives a touch signal corresponding to a user interaction for multitasking via a touch screen of the electronic device. If so, the touch pattern recognition means recognizes an interaction pattern corresponding to the touch signal in step S100. If a user makes a touch for multitasking on the touch screen of the electronic device, the touch screen generates a touch signal corresponding to this touch, i.e., an electrical signal in accordance with the user's touch. Step S100 recognizes a pattern corresponding to the user interaction to the electronic device from this electrical signal.

After step S100, a resource allocation determination means determines a resource allocation extent corresponding to the recognized interaction pattern in step S102. The resource allocation determination means determines the resource allocation extents of a CPU resource, a memory resource, a network resource and the like. In this case, the resource allocation determination means determines resource allocation on the basis of a resource allocation model which is designed via learning in accordance with the hardware characteristics of the CPU resource, the memory resource, and the network resource. In detail, the resource allocation model is designed via learning in a design step by a touch-based electronic device manufacturing company for the purpose of determining the allocation extent of each resource according to the interaction pattern

After step S102, a resource of the electronic device is allocated in accordance with the determined resource allocation extent in step S104. If the resource to be allocated is determined in the resource allocation determination means, allocation extent determination information about the determined CPU time, CPU frequency, memory usage area, and network bandwidth are delivered to a CPU scheduler, a CPU frequency controller, a memory allocator, and a network bandwidth controller, respectively. The CPU scheduler schedules a CPU driving time correspondingly to the determined CPU time. The CPU frequency controller outputs a corresponding frequency signal to a CPU such that the CPU is driven in accordance with the determined CPU frequency. The memory allocator allocates a memory usage area required for execution of an application, in accordance with the determined memory usage area. The network bandwidth controller allocates a network bandwidth of a modem such that an application can be guaranteed to use a network bandwidth or more, in accordance with the determined network bandwidth.

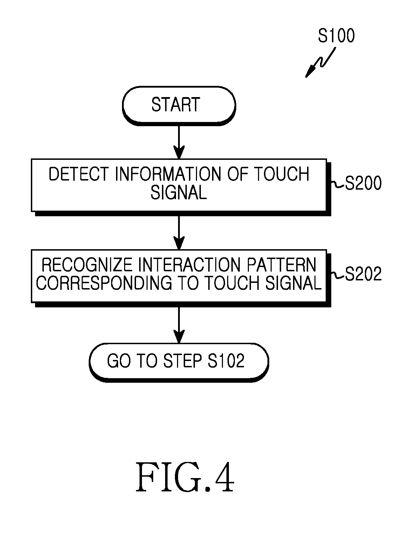

FIG. 4 is a flowchart of a method of describing the step S100 of recognizing the interaction pattern of FIG. 3.

A touch pattern recognition means detects information of any one or more of a sequence of coordinates of the touch screen at which touches occur, a touch duration time, a touch acceleration, and multi-touch or non-multi-touch, from a touch signal in step S200. Here, the sequence information represents a coordinate value corresponding to a position in which a user touch means (for example, a finger, a pen and the like) touches the touch screen, and the touch duration time represents a time for which the user touch means stays with tapping the touch screen, and the touch acceleration represents a velocity variation value generated the moment the user touch means touches the touch screen, and the multi-touch represents a state in which two or more touch means are concurrently tapping the touch screen.

After step S200, the touch pattern recognition means recognizes an interaction pattern corresponding to the touch signal in step S202. As one example, this interaction pattern includes an instant interaction pattern, a contiguous interaction pattern, a multi-touch interaction pattern and the like.

After step S202, the touch pattern recognition means proceeds to step S102 of FIG. 3.

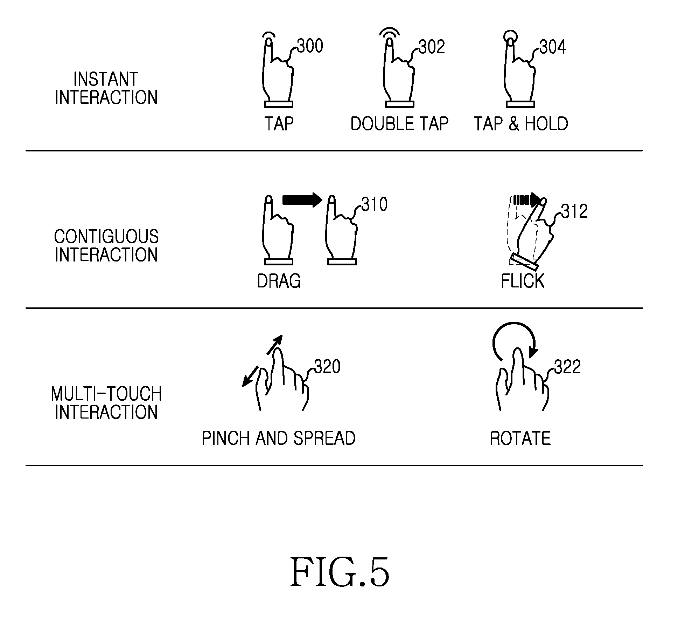

FIG. 5 is a diagram of instant interaction patterns, contiguous interaction patterns, and multi-touch interaction patterns as interaction patterns.

As illustrated in FIG. 5, the instant interaction pattern includes tap 300, double tap 302, tap & hold 304, and the like. Tap 300 is a pattern of momentarily tapping a touch screen once with a user touch means (for example, a finger, a pen, and the like). Double tap 302 is a pattern of instantly tapping the touch screen twice with the user touch means. Tap & hold 304 represents a pattern of tapping and holding the touch screen with the user touch means.

Also, as illustrated in FIG. 5, the contiguous interaction pattern includes drag 310, flick 312 and the like. Drag 310 is a pattern of moving the touch means on the touch screen in a state of tapping the touch screen with the user touch means. Flick 312 represents a pattern of moving the touch means like flicking on the screen in a state of tapping the touch screen with the user touch means.

Also, as illustrated in FIG. 5, the multi-touch interaction pattern includes pinch & spread 320, rotate 322, and the like. Pinch & spread 320 is a pattern of moving in the direction of increasing or decreasing a mutual gap of two or more touch means in a state of tapping the touch screen with two or more user touch means. Rotate 322 is a pattern of rotating two or more touch means in a state of tapping the touch screen with two or more user touch means.

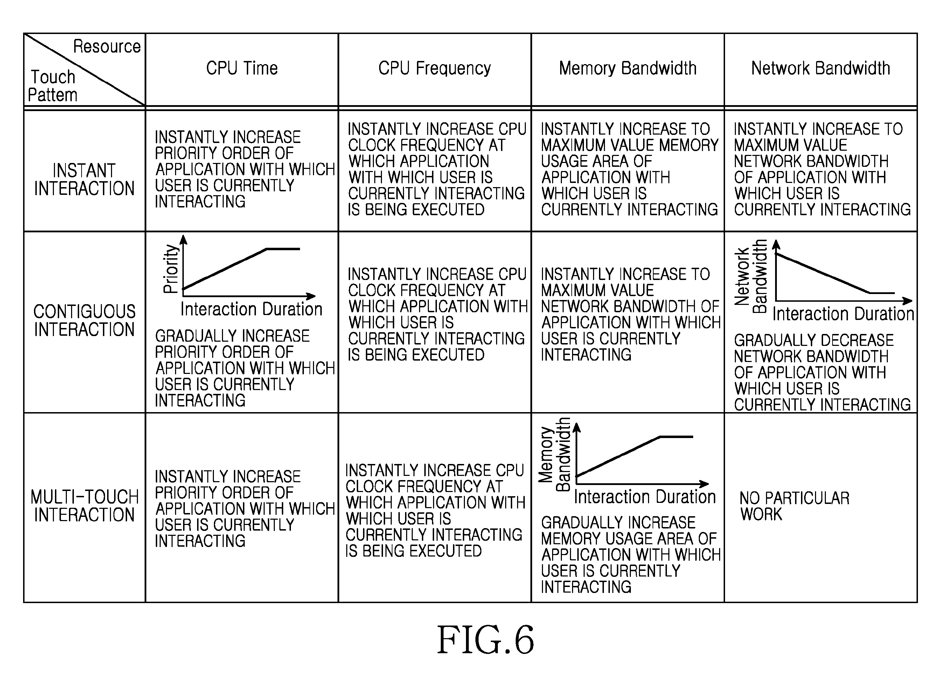

FIG. 6 is a diagram describing the allocation extents of a CPU time, a CPU clock frequency, a memory bandwidth, and a network bandwidth according to an interaction pattern.

A function of the resource allocation determination means is described below with reference to FIG. 6.

If an interaction pattern is an instant interaction pattern, the resource allocation determination means determines the allocation order of a CPU resource as top priority order, for an operation of an application according to the instant interaction pattern. That the CPU allocation order becomes the top priority order represents increasing the priority order of the application to the maximum value such that the corresponding application can be allocated a longer CPU time.

Also, if the interaction pattern is the instant interaction pattern, the resource allocation determination means determines a CPU clock frequency of the CPU resource as the maximum value, for the operation of the application according to the instant interaction pattern. That the CPU clock frequency becomes the maximum value represents maximizing CPU driving performance from an interaction occurrence time point such that the corresponding application can be executed more quickly.

Also, if the interaction pattern is the instant interaction pattern, the resource allocation determination means determines an allocation usage area of a memory resource as a possible maximum usage area, for the operation of the application according to the instant interaction pattern. That the usage area is determined to be the maximum usage area of the memory represents maximizing a usable memory area such that the corresponding application can be guaranteed sufficient memory usage.

Also, if the interaction pattern is the instant interaction pattern, the resource allocation determination means determines an allocation network bandwidth of a network resource as a possible maximum network bandwidth, for the operation of the application according to the instant interaction pattern. That the allocation network bandwidth is determined as the maximum network bandwidth represents maximizing a usable network bandwidth such that the corresponding application enables high-speed data exchange with other devices connected through a network.

Meanwhile, if the interaction pattern is a contiguous interaction pattern, the resource allocation determination means determines the allocation order of the CPU resource to be high order in proportion to a contiguous interaction pattern duration time, for an operation of an application according to the contiguous interaction pattern. The resource allocation determination means determines to have high priority order proportionally as much as a value multiplying time by a positive gain value such that the corresponding application can be allocated a longer CPU time. Accordingly, the resource allocation determination means determines to have higher priority order as a user interaction duration time becomes longer, thereby guaranteeing a long CPU time. In this case, the resource allocation determination means can set a threshold value to priority order given to the contiguous interaction pattern such that the given priority order does not exceed a predefined maximum priority order.

Also, if the interaction pattern is the contiguous interaction pattern, the resource allocation determination means determines a CPU clock frequency of the CPU resource as the maximum value, for the operation of the application of the contiguous interaction pattern. The resource allocation determination means maximizes the CPU clock frequency, thereby allowing a CPU to be driven at high speed from an interaction occurrence time point.

Also, if the interaction pattern is the contiguous interaction pattern, the resource allocation determination means determines an allocation usage area of a memory resource as a possible maximum usage area, for the operation of the application according to the contiguous interaction pattern. The resource allocation determination means determines a usable memory usage area of an application as the maximum value such that the corresponding application can be guaranteed sufficient memory usage.

Also, if the interaction pattern is the contiguous interaction pattern, the resource allocation determination means determines an allocation network bandwidth of a network resource to be a network bandwidth inversely proportional to a contiguous interaction pattern duration time, for the operation of the application according to the contiguous interaction pattern. The resource allocation determination means gradually compensates the priority order of an application as much as a value multiplying time by a negative gain value, such that the corresponding application can be allocated a longer network time. That is, the resource allocation determination means determines to allocate the application a smaller network bandwidth as a user interaction duration time increases. However, the resource allocation determination means determines the compensated network bandwidth not smaller than an originally allocated network bandwidth of the application.

Also, if the interaction pattern is the contiguous interaction pattern, and the contiguous interaction pattern duration time exceeds a certain threshold time, the resource allocation determination means determines the allocation network bandwidth of the network resource to be a possible minimum network bandwidth, for the operation of the application according to the contiguous interaction pattern. If the contiguous interaction pattern duration time gets longer than a threshold value, the resource allocation determination means minimizes the network bandwidth, thereby being capable of converting a CP into a low power mode and increasing the power efficiency of a mobile device.

Meanwhile, if the interaction pattern is a multi-touch interaction pattern, the resource allocation determination means determines the allocation order of the CPU resource as top priority order, for an operation of an application according to the multi-touch interaction pattern. A method of determining the allocation order of the CPU resource in a case of the multi-touch interaction pattern is the same as a method in a case of the instant interaction pattern.

Also, if the interaction pattern is the multi-touch interaction pattern, the resource allocation determination means determines a CPU clock frequency of the CPU resource as the maximum value, for the operation of the application according to the multi-touch interaction pattern. A method of determining the CPU clock frequency of the CPU resource in a case of the multi-touch interaction pattern is the same as a method in a case of the instant interaction pattern.

Also, if the interaction pattern is the multi-touch interaction pattern, the resource allocation determination means determines an allocation usage area of a memory resource to be a large usage area in proportion to a multi-touch interaction pattern duration time, for the operation of the application according to the multi-touch interaction pattern. The resource allocation determination means gradually compensates a usable memory usage area of an application with a value multiplying time by a positive gain value such that the corresponding application can be guaranteed sufficient memory usage. That is, the resource allocation determination means determines the memory usage area of the application such that the application can be allocated a larger memory usage area as a user interaction duration time increases. However, the resource allocation determination means can set the compensated memory area to a predefined maximum area or less. On the other hand, in a case of the multi-touch interaction pattern, there is no need to additionally adjust the network resource, so the resource allocation determination means allocates no separate network resource in such an extent that it maintains an existing set network bandwidth.

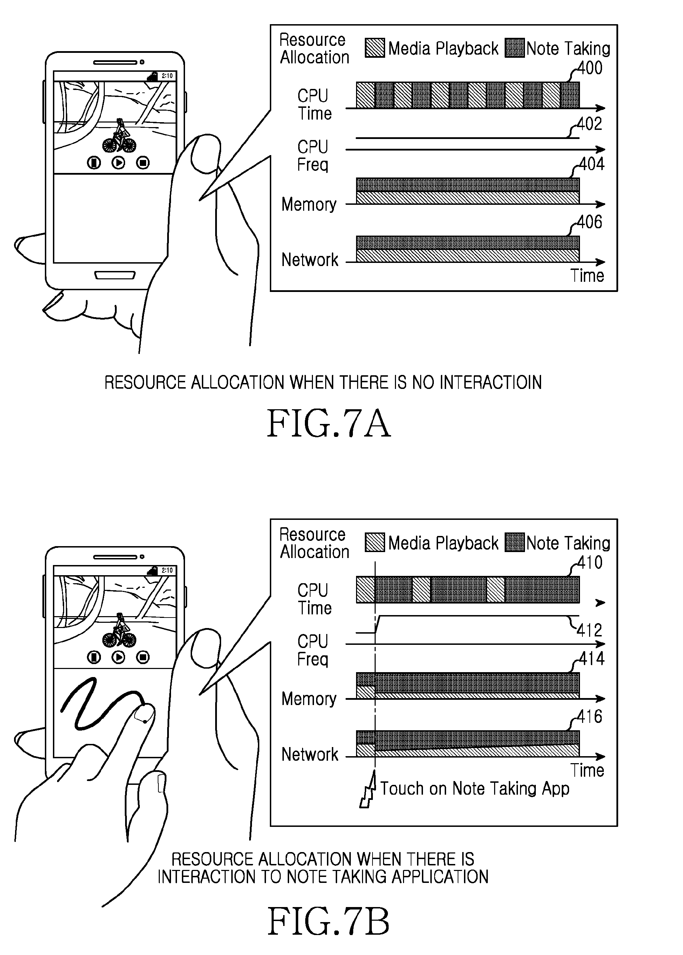

FIGS. 7A and 7B are diagrams exemplifying CPU, memory, and network resource allocation according to an interaction pattern.

It is assumed that a user is concurrently executing a video playback application and a note taking application using a multi-window function of a mobile device. FIG. 7A exemplifies resource allocation when there is no user interaction. Each resource allocation is the same as that of the conventional art. In an embodiment of the present invention, it is assumed that all applications occupying a screen of the mobile device are allocated the same CPU time 400, CPU clock frequency 402, memory usage area 404, and network bandwidth 406.In addition, FIG. 7B exemplifies each resource allocation when a user runs a note taking application and draws a line (that is, when having a contiguous interaction). As illustrated in FIG. 7B, in a case of a CPU time 410, the priority order of the note taking application is increased in accordance with a resource allocation policy of the present invention. And, the note taking application is allocated a relatively high importance compared to other applications (i.e., the video playback application) and is resultantly guaranteed to use a longer CPU time. Particularly, the note taking application is guaranteed a longer CPU time as a user interaction duration time increases. In a case of a CPU clock frequency 412, a clock frequency is increased to the maximum value from an interaction starting time point in accordance with the resource allocation policy of the present invention, and the note taking application can operate more quickly. In a case of a memory usage area 414, a usable memory area of the note taking application is increased in accordance with the resource allocation policy of the present invention and the note taking application can use a larger memory area. In a case of a network bandwidth 416, a usable network bandwidth of the note taking application is temporarily increased in accordance with the resource allocation policy of the present invention, but is again decreased to the original network bandwidth as the interaction duration time is increased.

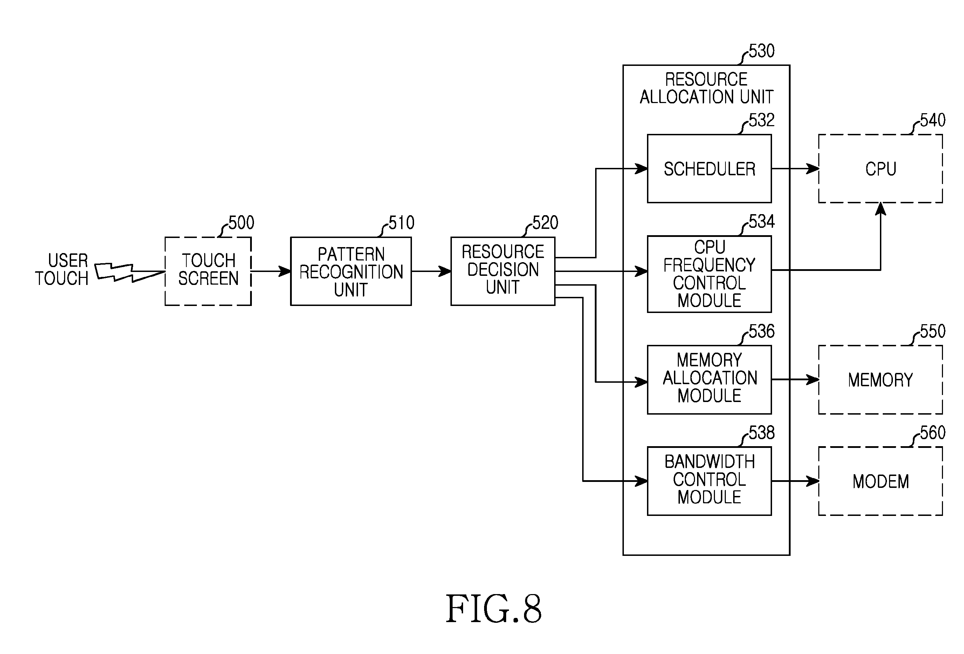

FIG. 8 is a block diagram of an apparatus 800 for allocating computing resources in a touch-based mobile device according to an embodiment of the present invention. The apparatus 800 includes a pattern recognition unit 510, a resource determination unit 520, and a resource allocation unit 530. Also, the apparatus 800 includes a touch screen 500, a CPU 540, a memory 550, and a modem 560 as accessory elements for describing the present invention.

If a user touches a display screen of the mobile device with a touch means (for example, a finger, a pen, and the like), the touch screen 500 senses tapping by the touch means, and generates an electrical signal (i.e., a touch signal) corresponding to the corresponding sensing result, and delivers the electrical signal to the pattern recognition unit 510. A function and structure of the touch screen 500 correspond to the conventional art and therefore, its detailed description is omitted. Also, functions and structures of the CPU 540, the memory 550, and the modem 560 correspond to the conventional art and therefore, their detailed descriptions are omitted.

If a touch signal corresponding to user interaction for multitasking is sensed through the touch screen 500, the pattern recognition unit 510 recognizes an interaction pattern corresponding to the touch signal in accordance with the sensed touch signal, and delivers the recognized result to the resource determination unit 520.

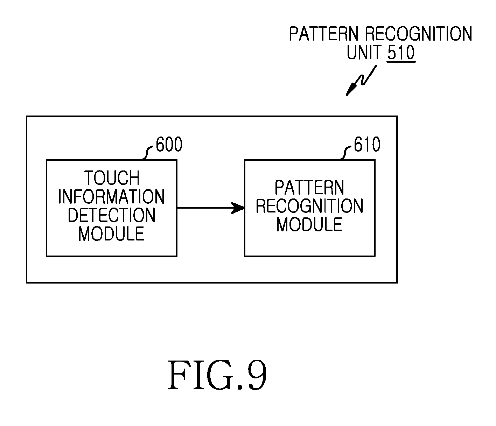

FIG. 9 is a block diagram of the pattern recognition unit 510 of FIG. 8. The pattern recognition unit 510 includes a touch information detection module 600 and a pattern recognition module 610.

The touch information detection module 600 detects information about a sequence of coordinates of a touch screen at which touches occur, a touch duration time, a touch acceleration, multi-touch or non-multi-touch and the like, and delivers the detected information to the pattern recognition module 610. The touch information detection module 600 has a hardware resource and/or software resource for detecting a sequence of coordinates, a touch duration time, a touch acceleration, and multi-touch or non-multi-touch. The touch information detection module 600 detects as the sequence information a coordinate value corresponding to a position in which a touch means (for example, a finger, a pen, and the like) touches a touch screen. The touch information detection module 600 detects as the touch duration time information a time maintaining a state in which the touch means taps the touch screen. The touch information detection module 600 detects as the touch acceleration information a velocity variation value generated the moment the touch means touches on the touch screen. The touch information detection module 600 detects as the multi-touch information state information in which two or more touch means are concurrently tapping the touch screen.

The pattern recognition module 610 recognizes an interaction pattern corresponding to a touch signal from the information detected in the touch information detection module 600, and delivers information of the recognized interaction pattern to the resource determination unit 520 in FIG. 8.

The pattern recognition module 610 of FIG. 9 recognizes any one of an instant interaction pattern, a contiguous interaction pattern, and a multi-touch interaction pattern as an interaction pattern.

The pattern recognition module 610 recognizes tap, double tap, tap & hold or the like as the instant interaction pattern. Also, the pattern recognition module 610 recognizes drag, flick or the like as the contiguous interaction pattern. Also, the pattern recognition module 610 recognizes pinch & spread, rotate or the like as the multi-touch interaction pattern.

If the touch means instantly taps the touch screen once, the pattern recognition module 610 recognizes it as a tap pattern. If the touch means taps the touch screen twice, the pattern recognition module 610 recognizes it as a double tap pattern. If the touch means holds a corresponding tapping state in a state of tapping the touch screen, the pattern recognition module 610 recognizes it as a tap & hold pattern.

Also, if the touch means moves in a state of tapping the touch screen, the pattern recognition module 610 recognizes it as a drag pattern. If the touch means moves like flicking in a state of tapping the touch screen, the pattern recognition module 610 recognizes it as a flick pattern.

Also, if two or more touch means move in the direction of increasing or decreasing a mutual gap of the touch means in a state of tapping the touch screen, the pattern recognition module 610 recognizes it as a pinch & spread pattern. If the two or more touch means rotate in a state of tapping the touch screen, the pattern recognition module 610 recognizes it as a rotate pattern.

The resource determination unit 520 of FIG. 8 determines a resource allocation extent corresponding to the interaction pattern recognized in the pattern recognition unit 510 and delivers information of the determined resource allocation extent to the resource allocation unit 530.

The resource determination unit 520 determines the resource allocation extents of a CPU resource, a memory resource, a network resource and the like.

The resource determination unit 520 determines the resource allocation extent on the basis of a resource allocation model which is designed via learning in accordance with the hardware characteristics of the CPU resource, the memory resource, and the network resource. The resource determination unit 520 determines the allocation extent of each resource according to an interaction pattern, based on the resource allocation model which is designed via learning in a design step by a manufacturing company.

If the interaction pattern is an instant interaction pattern, the resource determination unit 520 determines the allocation order of a CPU resource as top priority order, for an operation of an application according to the instant interaction pattern. The resource determination unit 520 determines the allocation order of the application as top priority order such that the application for execution of the instant interaction pattern can be allocated a longer CPU time.

Also, if the interaction pattern is the instant interaction pattern, the resource determination unit 520 determines a CPU clock frequency of a CPU resource as the maximum value. The resource determination unit 520 determines the CPU clock frequency as the maximum value from an interaction occurrence time point such that the application for execution of the instant interaction pattern can be operated more quickly.

Also, if the interaction pattern is the instant interaction pattern, the resource determination unit 520 determines an allocation usage area of a memory resource as a possible maximum usage area. The resource determination unit 520 determines to maximize a usable memory area such that the application for performing the instant interaction pattern can be guaranteed sufficient memory usage.

Also, if the interaction pattern is the instant interaction pattern, the resource determination unit 520 determines an allocation network bandwidth of a network resource as a possible maximum network bandwidth. The resource determination unit 520 determines to maximize a usable network bandwidth such that the application for performing the instant interaction pattern enables high-speed data exchange with other devices connected via a network.

In addition, if the interaction pattern corresponds to a contiguous interaction pattern, the resource determination unit 520 determines the allocation order of the CPU resource to be high order in proportion to a contiguous interaction pattern duration time. The resource determination unit 520 determines to have high priority order proportionally as much as a value multiplying time by a positive gain value such that the application for performing the contiguous interaction pattern can be allocated a longer CPU time. Accordingly, the resource determination unit 520 determines to have higher priority order as a user interaction duration time becomes longer, thereby guaranteeing a long CPU time. In this case, the resource determination unit 520 can set a threshold value to priority order given to the contiguous interaction pattern such that the given priority order does not exceed a predefined maximum priority order.

Also, if the interaction pattern is the contiguous interaction pattern, the resource determination unit 520 determines a CPU clock frequency of the CPU resource as the maximum value. The resource determination unit 520 determines the CPU clock frequency as the maximum value, thereby allowing a CPU to be driven at high speed from an interaction occurrence time point.

Also, if the interaction pattern is the contiguous interaction pattern, the resource determination unit 520 determines an allocation usage area of a memory resource as a possible maximum usage area. The resource determination unit 520 determines a usable memory usage area of an application as the maximum value such that the application for performing the contiguous interaction pattern can be guaranteed sufficient memory usage.

Also, if the interaction pattern is the contiguous interaction pattern, the resource determination unit 520 determines an allocation network bandwidth of a network resource to be a network bandwidth inversely proportional to a contiguous interaction pattern duration time. The resource determination unit 520 gradually compensates the priority order of an application as much as a value multiplying time by a negative gain value, such that the application for performing the contiguous interaction pattern can be allocated a longer network time. That is, the resource determination unit 520 determines to allocate the application a smaller network bandwidth as a user interaction duration time increases. However, the resource determination unit 520 determines the compensated network bandwidth not smaller than an originally allocated network bandwidth of the application.

Also, if the interaction pattern is the contiguous interaction pattern, and the contiguous interaction pattern duration time exceeds a certain threshold time, the resource determination unit 520 determines the allocation network bandwidth of the network resource to be a possible minimum network bandwidth, for the operation of the application according to the contiguous interaction pattern. Whether the contiguous interaction pattern duration time exceeds the certain threshold value is detected in the aforementioned pattern recognition unit 510. If the contiguous interaction pattern duration time gets longer than a specific threshold value, the resource determination unit 520 determines to minimize the network bandwidth to convert a CP into a low power mode.

Meanwhile, if the interaction pattern is a multi-touch interaction pattern, the resource determination unit 520 determines the allocation order of the CPU resource as top priority order.

Furthermore, if the interaction pattern is the multi-touch interaction pattern, the resource determination unit 520 determines a CPU clock frequency of the CPU resource as the maximum value.

Also, if the interaction pattern is the multi-touch interaction pattern, the resource determination unit 520 determines an allocation usage area of a memory resource to be a large usage area in proportion to a multi-touch interaction pattern duration time. The resource determination unit 520 gradually compensates a usable memory usage area of an application with a value multiplying time by a positive gain value such that the application for performing the multi-touch interaction pattern can be guaranteed sufficient memory usage. That is, the resource determination unit 520 determines the memory usage area such that the application can be allocated a larger memory usage area as a user interaction duration time increases. However, the resource determination unit 520 can set the compensated memory area to a predefined maximum area or less. On the other hand, in a case of the multi-touch interaction pattern, there is no need to additionally adjust the network resource, so the resource determination unit 520 allocates no separate network resource in such an extent that it maintains an existing set network bandwidth.

The resource allocation unit 530 allocates a resource of a mobile device, in accordance with a resource allocation extent determined in the resource determination unit 520, and delivers a signal for allocation to the CPU 540, the memory 550, and the modem 560, respectively. In this case, the resource allocation unit 530 includes a scheduler 532, a CPU frequency control module 534, a memory allocation module 536, and a bandwidth control module 538.

The scheduler 532 schedules a CPU allocation time in accordance with a resource allocation extent, and outputs a scheduling signal to the CPU 540.

If an interaction pattern is any one of an instant interaction pattern and a multi-touch interaction pattern, the scheduler 532 instantly increases the priority order of an application to the maximum value such that the application can be allocated a longer CPU time.

Also, if the interaction pattern is a contiguous interaction pattern, the scheduler 532 gradually increases the priority order of an application in proportion to a contiguous interaction duration time such that the application can be allocated a longer CPU time.

The CPU frequency control module 534 outputs a CPU clock frequency signal to the CPU 540 in accordance with a resource allocation extent.

If an interaction pattern is any one of an instant interaction pattern, a contiguous interaction pattern, and a multi-touch interaction pattern, the CPU frequency control module 534 instantly increases to the maximum value a CPU clock frequency at which an application is being executed from an interaction occurrence time point, such that the application can be executed more quickly.

The memory allocation module 536 outputs a signal for allocating a memory usage area, to the memory 550 in accordance with the resource allocation extent.

If an interaction pattern is any one of an instant interaction pattern and a contiguous interaction pattern, the memory allocation module 536 instantly increases a usable memory usage area of an application to the maximum value such that the application can be guaranteed sufficient memory usage.

Also, in a case of a multi-touch interaction pattern, the memory allocation module 536 gradually increases a usable memory usage area of an application in proportion to a multi-touch interaction duration time such that the application can be guaranteed sufficient memory usage. That is, the memory allocation module 536 allocates a larger memory area as a user interaction duration time increases.

The bandwidth control module 538 outputs a signal for allocating a network bandwidth of the modem 560, to the modem 560 in accordance with a resource allocation extent.

In a case of an instant interaction pattern, the bandwidth control module 538 instantly increases a usable network bandwidth of an application to the maximum value such that the application can respond quickly.

Also, in a case of a contiguous interaction pattern, the bandwidth control module 538 gradually compensates the priority order of an application with a value multiplying time by a negative gain value such that the application can be allocated a longer network time. That is, the bandwidth control module 538 allocates the application a smaller network bandwidth as a user interaction duration time increases.

Also, in a case of the contiguous interaction pattern, if a contiguous interaction duration time gets longer than a constant threshold value, the bandwidth control module 538 minimizes a network bandwidth.

On the other hand, in a case of a multi-touch interaction pattern, there is no need to additionally adjust a network resource, so the bandwidth control module 538 allocates no separate network resource in such an extent that it maintains an existing set network bandwidth.

The present invention improves a user experience in a touch-based mobile device by suitably allocating computing resources in accordance with a kind of user interaction by a touch pattern in the course of a process of performing multitasking in the touch-based mobile device.

Embodiments of the present invention according to the claims and description in the specification can be realized in the form of hardware, software or a combination of hardware and software.

Such software may be stored in a computer readable storage medium. The computer readable storage medium stores one or more programs (software modules), the one or more programs comprising instructions, which when executed by one or more processors in an electronic device, cause the electronic device to perform methods of the present invention.

Such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disc (CD), Digital Video Disc (DVD), magnetic disk or magnetic tape or the like. It will be appreciated that the storage devices and storage media are embodiments of machine-readable storage that are suitable for storing a program or programs comprising instructions that, when executed, implement embodiments of the present invention. Embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present invention has been shown and described with reference to certain embodiments thereof, it will be understood by those skilled in the art that various changes in form and details may be made therein without departing from the spirit and scope of the present invention, as defined by the appended claims and their equivalents.

## Claims

1. A method of allocating resources in a touch-based electronic device, the method comprising:
recognizing an interaction pattern corresponding to a touch signal if the touch signal corresponding to a user interaction for multitasking via a touch screen of the electronic device is received;
determining a level of a resource based on the interaction pattern; and
allocating at least one resource of the electronic device in accordance with the level.

2. The method of claim 1, wherein recognizing the interaction pattern comprises:
detecting information of any one or more of a sequence of coordinates of the touch screen at which touches occur, a touch duration time, a touch acceleration, and a multi-touch or non-multi-touch, from the touch signal; and
recognizing the touch signal as the interaction pattern on the basis of the detected information.

3. The method of claim 2, wherein the interaction pattern is one of an instant interaction pattern, a contiguous interaction pattern, and a multi-touch interaction pattern,
wherein the instant interaction pattern is at least one of tap, double tap, and tap & hold,
wherein the contiguous interaction pattern is at least one of drag and flick, and
wherein the multi-touch interaction pattern is at least one of pinch & spread and rotate.

4. The method of claim 1, wherein determining the level of the resource comprises determining a level of the resource of at least one of a Central Processing Unit (CPU) resource, a memory resource, and a network resource.

5. The method of claim 4, wherein determining the level of the resource further comprises determining on a basis of a resource allocation model which is designed via learning in accordance with hardware characteristics of the CPU resource, the memory resource, and the network resource.

6. The method of claim 4, wherein, if the interaction pattern is one of an instant interaction pattern and a multi-touch interaction pattern, an allocation order of the CPU resource is determined as a top priority order, for an operation of an application based on the instant interaction pattern or the multi-touch interaction pattern.

7. The method of claim 9, wherein, if the interaction pattern is one of the instant interaction pattern and the multi-touch interaction pattern, a CPU clock frequency of the CPU resource is determined as a maximum value, for the operation of the application based on the instant interaction pattern or the multi-touch interaction pattern.

8. The method of claim 4, wherein, if the interaction pattern is one of an instant interaction pattern and a multi-touch interaction pattern, an allocation usage area of the memory resource is determined as the possible maximum usage area, for an operation of an application based on the instant interaction pattern or the multi-touch interaction pattern.

9. The method of claim 4, wherein, if the interaction pattern is an instant interaction pattern, an allocation network bandwidth of the network resource is determined as a possible maximum network bandwidth, for an operation of an application based on the instant interaction pattern.

10. The method of claim 4, wherein, if the interaction pattern is a contiguous interaction pattern, an allocation order of the CPU resource is determined to be a higher order in proportion to a contiguous interaction pattern duration time, for an operation of an application based on the contiguous interaction pattern.

11. The method of claim 10, wherein, if the interaction pattern is the contiguous interaction pattern, a CPU clock frequency of the CPU resource is determined as a maximum value, for the operation of the application based on the contiguous interaction pattern.

12. The method of claim 4, wherein, if the interaction pattern is a contiguous interaction pattern, an allocation network bandwidth of the network resource is determined to be a network bandwidth inversely proportional to a contiguous interaction pattern duration time, for an operation of an application based on the contiguous interaction pattern.

13. The method of claim 4, wherein, if the interaction pattern is a contiguous interaction pattern, and a contiguous interaction pattern duration time exceeds a constant threshold time, an allocation network bandwidth of the network resource is determined to be a possible minimum network bandwidth, for an operation of an application based on the contiguous interaction pattern.

14. The method of claim 4, wherein, if the interaction pattern is a multi-touch interaction pattern, an allocation usage area of the memory resource is determined to be a large usage area in proportion to a multi-touch interaction pattern duration time, for an operation of an application based on the multi-touch interaction pattern.

15. An electronic device comprising a processor unit wherein the processor is further arranged to operate the method of any one of claims 1 to 14.
